# EUROPEAN PATENT APPLICATION

(11) **EP 4 814 307 A1**
(43) Date of publication of application: **30.09.2026**
(21) Application number: 24895777.1
(22) Date of filing: 16.08.2024
(51) Int. Cl.: F04B 49/06, F04B 49/20, H02P 23/14, H02P 23/04

(54) **COMPRESSOR CONTROL METHOD AND APPARATUS, AND DEVICE AND STORAGE MEDIUM**

(30) Priority: 29.11.2023 CN 202311631194
(71) Applicant: Anhui Meizhi Compressor Co., Ltd., Hefei, Anhui Province 230088 (CN); Midea Welling Motor Technology (Shanghai) Co., Ltd., Shanghai 201203 (CN)
(72) Inventor: ZHENG, Zhihao, Hefei, Anhui 230088 (CN); LIU, Tianyi, Hefei, Anhui 230088 (CN); FU, Junyong, Hefei, Anhui 230088 (CN); XU, Peilin, Hefei, Anhui 230088 (CN)
(74) Representative: Ran, Handong
(86) International application number: PCT/CN2024/112853
(87) International publication number: WO 2025/112676

(57) **Abstract**

The present application relates to a compressor control method and apparatus, and a device and a storage medium. The method in the present application comprises: compiling statistics on the minimum rotation speed error of a compressor during operation, and a corresponding target phase compensation value; then, on the basis of a mechanical frequency harmonic component and the minimum rotation speed error, generating a mechanical frequency harmonic component amplitude; and on the basis of the mechanical frequency harmonic component amplitude and the target phase compensation value, compensating for a vertical current component of the compressor by means of a preset current compensation model.

## Description

### CROSS-REFERENCE TO RELATED APPLICATIONS

The present application claims priority to Chinese Patent Application No. 202311631194.0, filed on November 29, 2023, the entire content of the above-mentioned application is incorporated herein by reference.

### TECHNICAL FIELD

The present application relates to the technical field of motor control, and in particular to a compressor control method, an apparatus, a device, and a storage medium.

### BACKGROUND

During the operation of the compressor, if the operation rotation speed of the compressor is reduced, that is, it is in a low-frequency operation state, the frequency of the compressor load torque fluctuation will decrease accordingly. Under the same structural inertia, the vibration amplitude of the compressor will become larger, thereby increasing the vibration noise generated during the operation of the compressor.

The above contents are only used to assist in understanding the technical solution of the present application and do not constitute an admission that the above contents are related technologies.

### SUMMARY

The main purpose of the present application is to provide a compressor control method, an apparatus, a device, and a storage medium, aiming to solve the technical problem of compressor control in related technologies.

To achieve the above purpose, the present application provides a compressor control method, including:
counting a minimum rotation speed error and a corresponding target phase compensation value in response to that the compressor is operating;
acquiring a mechanical frequency multiplication component corresponding to a mechanical frequency of the compressor;
generating a mechanical frequency multiplication component amplitude according to the mechanical frequency multiplication component and the minimum rotation speed error;
compensating a vertical current component of the compressor through a preset current compensation model according to the mechanical frequency multiplication component amplitude and the target phase compensation value; and
driving the compressor to operate according to a compensated vertical current component.

In an embodiment, the counting the minimum rotation speed error and the corresponding target phase compensation value in response to that the compressor is operating includes:
counting a rotation speed error set in response to that the compressor is operating;
determining a minimum rotation speed error value in the rotation speed error set and a corresponding number of iterations; and
determining the target phase compensation value according to the number of iterations, a preset phase iteration step and an initial phase compensation value.

In an embodiment, before the determining the target phase compensation value according to the number of iterations, the preset phase iteration step and the initial phase compensation value, the method further includes:
acquiring the mechanical frequency of the compressor;
performing frequency multiplication processing on the mechanical frequency to acquire the mechanical frequency multiplication component; and
querying the initial phase compensation value corresponding to the mechanical frequency multiplication component.

In an embodiment, the counting the rotation speed error set in response to that the compressor is operating includes:
acquiring a current operation mode of the compressor and a corresponding rotation speed control instruction;
extracting a set rotation speed in the rotation speed control instruction;
counting a feedback rotation speed of the compressor at each moment after receiving the rotation speed control instruction; and
counting a rotation speed error between the set rotation speed and the feedback rotation speed.

In an embodiment, the compensating the vertical current component of the compressor through the preset current compensation model according to the mechanical frequency multiplication component amplitude and the target phase compensation value includes:
determining operation parameters of a parallel resonant controller according to the target phase compensation value, the mechanical frequency multiplication component, and the rotation speed error;
calculating a vertical current component compensation value corresponding to the mechanical frequency multiplication component amplitude by the parallel resonant controller; and
compensating the vertical current component of the compressor according to the vertical current component compensation value.

In an embodiment, the determining the mechanical frequency multiplication component and the mechanical frequency multiplication component amplitude corresponding to the minimum rotation speed error includes:
filtering the minimum rotation speed error and the mechanical frequency multiplication component by a low-pass filter to acquire the mechanical frequency multiplication component amplitude.

In an embodiment, before the calculating the vertical current component compensation value corresponding to the mechanical frequency multiplication component amplitude by the parallel resonant controller, the method further includes:
determining a resonant frequency of the target parallel resonant controller according to the mechanical frequency multiplication component; and
determining a phase compensation value of the target parallel resonant controller according to the target phase compensation value.

In addition, to achieve the above purpose, the present application also provides a compressor control apparatus, including:
a statistical module, configured for counting a minimum rotation speed error and a corresponding target phase compensation value when the compressor is operating;
an acquisition module, configured for acquiring a mechanical frequency multiplication component corresponding to a mechanical frequency of the compressor;
a generation module, configured for generating a mechanical frequency multiplication component amplitude according to the mechanical frequency multiple frequency component and the minimum rotation speed error;
a compensation module, configured for compensating a vertical current component of the compressor through a preset current compensation model according to the mechanical frequency multiplication component amplitude and the target phase compensation value; and
a control module, configured for driving the compressor to operate according to a compensated vertical current component.

In addition, to achieve the above purpose, the present application also provides a compressor control device, including: a memory, a processor, and a compressor control program stored in the memory and executable on the processor; the compressor control program is configured to implement the compressor control method.

In addition, to achieve the above purpose, the present application also provides a storage medium; a compressor control program is stored on the storage medium, and when the compressor control program is executed by a processor, the compressor control method is implemented.

### BRIEF DESCRIPTION OF THE DRAWINGS

FIG. 1 is a structural schematic diagram of a compressor control device in a hardware operating environment according to an embodiment of the present application.
FIG. 2 is a flow chart of a first embodiment of a compressor control method of the present application.
FIG. 3 is a flow chart of a second embodiment of the compressor control method of the present application.
FIG. 4 is a flow chart of a third embodiment of the compressor control method of the present application.
FIG. 5 is a structural block diagram of a first embodiment of a compressor control apparatus of the present application.

The realization of the purpose, functional features and advantages of the present application will be further explained in conjunction with the embodiments and with reference to the accompanying drawings.

### DETAILED DESCRIPTION OF THE EMBODIMENTS

It should be understood that the specific embodiments described herein are only used to explain the present application and are not used to limit the present application.

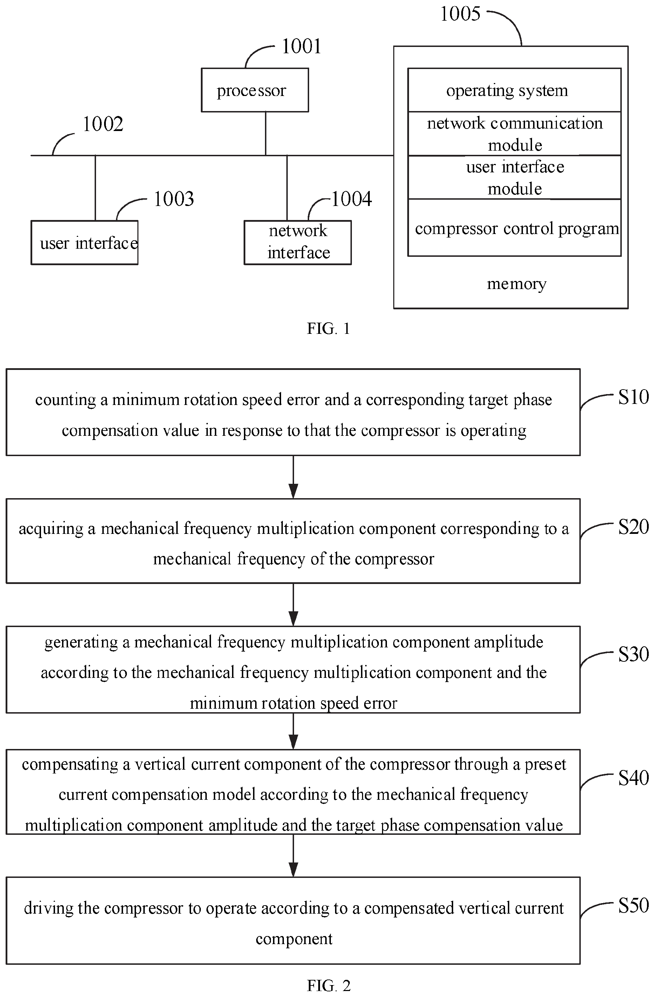

Referring to FIG. 1, FIG. 1 is a structural schematic diagram of a compressor control device in the hardware operating environment according to an embodiment of the present application.

As shown in FIG. 1, the compressor control device may include: a processor 1001, such as a central processing unit (CPU), a communication bus 1002, a user interface 1003, a network interface 1004, and a memory 1005. The communication bus 1002 is used to realize the connection and communication between these components. The user interface 1003 may include a display, an input unit such as a keyboard, and the user interface 1003 may also include a standard wired interface and a wireless interface. The network interface 1004 may include a standard wired interface and a wireless interface (such as a wireless fidelity (Wi-Fi) interface). The memory 1005 may be a high-rotation speed random access memory ( RAM) or a stable non-volatile memory (NVM), such as a disk storage. The memory 1005 may also be a storage device independent of the aforementioned processor 1001.

Those skilled in the art will appreciate that the structure shown in FIG. 1 does not constitute a limitation on the compressor control device, and may include more or fewer components than shown, or a combination of certain components, or a different arrangement of components.

As shown in FIG. 1, the memory 1005 as a storage medium may include an operating system, a network communication module, a user interface module, and a compressor control program.

In the compressor control device shown in FIG. 1, the network interface 1004 is mainly used for data communication with the network server; the user interface 1003 is mainly used for data interaction with the user; the processor 1001 and the memory 1005 in the compressor control device of the present application can be set in the compressor control device, and the compressor control device calls the compressor control program stored in the memory 1005 through the processor 1001, and executes the compressor control method provided in the embodiment of the present application.

An embodiment of the present application provides a compressor control method. Referring to FIG. 2, FIG. 2 is a flow chart of a first embodiment of a compressor control method of the present application.

In this embodiment, the compressor control method includes the following steps:
Step S10: counting the minimum rotation speed error and the corresponding target phase compensation value when the compressor is operating.

It should be noted that the execution subject of this embodiment can be a device with functions such as data processing, program operating and data acquisition, such as: a controller of a temperature control device or a control computer for testing, etc., and can also be other devices that can achieve the same or similar functions. This embodiment does not make specific restrictions on this. Different choices can be made according to its specific application scenarios. For example: when performing low-frequency control of temperature control devices such as refrigerators and air conditioners, the execution subject can be the core controller of these temperature control devices. When performing an operation test on a compressor, the execution subject of the method of this embodiment can be a control computer for testing. For the convenience of explanation, this embodiment and the following embodiments are all described by taking the controller of the temperature control device as an example.

It should be noted that under the current development trend of lightweight and flattening of compressors, the motor winding of the compressor is changed from copper wire to aluminum wire; the inertia of the structure above the compressor seat spring is reduced; the inherent vibration frequency of the compressor is increased; and the vibration noise of the compressor is further deteriorated.

The traditional compressor controller uses a proportional-integral regulator to adjust the rotation speed. During low-frequency operation, due to load torque fluctuations, the compressor rotation speed has periodic fluctuations in the mechanical frequency. Since the proportional-integral regulator responds slowly, it cannot respond and adjust in time to the rotation speed fluctuations of the mechanical frequency. As a result, the rotation speed fluctuations during low-frequency operation cannot be quickly and effectively suppressed; the vibration and noise of the compressor at low frequency operation worsen; the load capacity and stability are limited; and the operation range of the compressor is limited.

In order to solve the above problems, this embodiment statistically calculates the minimum rotation speed error and the corresponding target phase compensation value when the compressor is operating, and then performs current compensation on the compressor through a preset current compensation model according to the minimum rotation speed error and the target phase compensation value, thereby reducing the noise generated by the low-frequency operation of the compressor and extending the operation life of the compressor. At the same time, it can adaptively adjust the parameters of the low-frequency oscillation suppression method to reduce the rotation speed fluctuation of the compressor when it runs at low frequency.

It can be understood that the rotation speed error during compressor operation refers to the error between theoretical operation rotation speed of the compressor and the actual operation rotation speed. The minimum rotation speed error can be the minimum value of the rotation speed error within an operation cycle. The process of acquiring the rotation speed error during compressor operation is a continuous process. In the process of controlling the compressor, the compensation value of the specific vertical current component can be calculated according to the rotation speed error within a cycle, and then the compressor can be compensated for current in the next cycle to reduce the noise when the compressor runs at a low frequency.

Because the compressor motor cannot respond to and adjust the rotation speed fluctuation of the mechanical frequency in time during operation. In this embodiment, the input control signal is input in advance to increase the reaction time of the compressor, thereby realizing phase compensation of the compressor; the initial setting value of the phase compensation is related to the mechanical frequency multiplication component corresponding to the mechanical frequency of the compressor.

Step S20: acquiring a mechanical frequency multiplication component corresponding to the mechanical frequency of the compressor.

It should be noted that the mechanical frequency of the compressor refers to the frequency of the power supply connected to the stator winding when the compressor is in rated operation condition, which can also be called the rated frequency, and the mechanical frequency multiplication component refers to the Nth multiplier of the mechanical frequency of the compressor.

Step S30: generating a mechanical frequency multiplication component amplitude according to the mechanical frequency multiplication component and the minimum rotation speed error.

The minimum rotation speed error and the mechanical frequency multiplication component are filtered by a low-pass filter to acquire the mechanical frequency multiplication component amplitude.

In a specific implementation, the formula for determining the mechanical frequency multiplication component amplitude according to the mechanical frequency is:
${K}_{N} = {f}_{z _ N} \left({ω}_{Err}, {ω}_{m _ N}\right)$

Among them, ω_{m_N} is the Nth multiplier of the mechanical frequency ωₘ, N = 1, 2, 3..., and *f*_{*z_*N} is the filter with a cut-off frequency of ω_{N}.

It can be understood that the low-pass filter refers to a low-pass filter with a cut-off frequency being the mechanical frequency ωₘ.

Step S40: compensating the vertical current component of the compressor through a preset current compensation model according to the mechanical frequency multiplication component amplitude and the target phase compensation value.

It should be understood that the preset current compensation model can be used to calculate the current compensation amount corresponding to the rotation speed error and the target phase compensation value in the current cycle, and then in the next operation cycle, the compensated target operation current can be calculated based on the current compensation amount and the operation current of the current operation cycle, thereby alleviating the vibration of the low-frequency operation of the compressor and reducing the generation of noise.

It can be understood that the vertical current component in this embodiment refers to the q-axis current component of the compressor. The q-axis is also called the quadrature axis, which is mainly used to control the magnitude of the force. In addition, there is a p-axis, which is also called the direct axis, which is mainly used to control the magnitude of the magnetic field.

This embodiment adjusts the current component of the q-axis in the compressor, thereby reducing the vibration stress of the compressor, alleviating the vibration of the compressor at low frequency operation, and reducing the generation of noise.

Step S50: driving the compressor to operate according to the compensated vertical current component.

In a specific implementation, after the current compensation amount is determined in the current cycle, the vibration noise of the compressor in the next operation cycle is reduced by adjusting the magnitude of the q-axis current component of the compressor motor in the next operation cycle, thereby improving the stability of the compressor operation.

This embodiment counts the minimum rotation speed error and the corresponding target phase compensation value when the compressor is operating, and then performs current compensation on the compressor through a preset current compensation model according to the minimum rotation speed error and the target phase compensation value, thereby reducing the noise generated by the low-frequency operation of the compressor, avoiding the technical problem of large vibration noise when the compressor is operating at low frequency in the related technology, improving the reliability and stability of the compressor when operating at low frequency, extending the operation life of the compressor, and at the same time being able to adaptively adjust the parameters of the low-frequency oscillation suppression method to reduce the rotation speed fluctuation of the compressor when operating at low frequency.

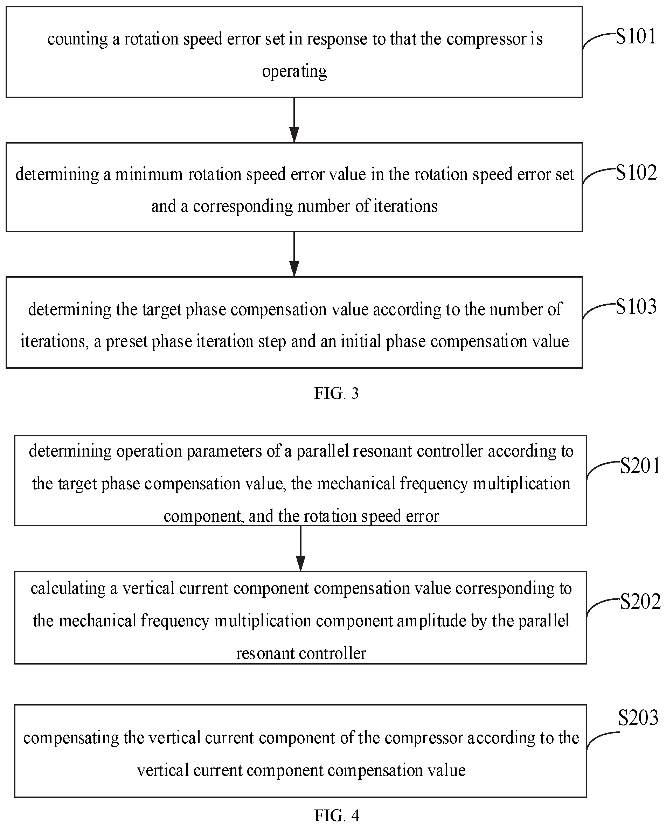

Referring to FIG. 3, FIG. 3 is a flow chart of a second embodiment of a compressor control method of the present application.

Based on the above first embodiment, in an embodiment, step S10 includes:
Step S101: counting the rotation speed error set when the compressor is operating.

It should be noted that the process of acquiring the rotation speed error of the compressor during operation is a continuous process. When current compensation is performed on the compressor, the q-axis current component of the next operation cycle can be controlled according to the rotation speed error set within one cycle, thereby reducing the vibration phenomenon.

Furthermore, the counting the rotation speed error set when the compressor is operating includes:
acquiring the current operation mode of the compressor and the corresponding rotation speed control instruction;
extracting the set rotation speed in the rotation speed control instruction;
counting the feedback rotation speed of the compressor at each moment after receiving the rotation speed control instruction;
counting the rotation speed error between the set rotation speed and the feedback rotation speed.

In a specific implementation, there is a corresponding relationship between the rotation speed control instruction of the compressor in the current cycle and the current operation mode. If the set rotation speed of the compressor is ω_{Ref} and the actual rotation speed is ω_{Fdb}, the rotation speed error ω_{Err} is calculated as follows:
${ω}_{Err} = {ω}_{Ref} - {ω}_{Fdb}$

Where, ω_{Ref} is the set rotation speed corresponding to the rotation speed control instruction, and ω_{Fdb} is the actual rotation speed of the compressor.

For example: during the operation of the air conditioner, when the compressor is controlled and a rotation speed instruction is issued, theoretically the rotation speed of the compressor during operation should correspond to the rotation speed instruction. If the rotation speed instruction is 4000 rpm, theoretical operation rotation speed should also be 4000 rpm. However, due to the influence of the internal impedance or mechanical structure of the motor, the actual operation rotation speed of the compressor may be only 3500 rpm. Then, the rotation speed error is 500 rpm. This embodiment does not impose any specific restrictions on this.

Step S102: determining the minimum rotation speed error value in the rotation speed error set and the corresponding number of iterations.

It should be noted that since the compressor is essentially a kind of motor, the motor's operation voltage maps to current changes, the operation current maps to torque, and the torque maps to rotation speed changes. When there is an error in the rotation speed of the compressor, there will also be a certain error in the corresponding torque, just like when the initial input current is input into the motor, it is affected by the impedance of the wires or components, and the current actually received by the motor is less than the initial input current.

Therefore, in an embodiment, the smaller the rotation speed error is, the smaller the phase and current required to be compensated are, thereby ensuring the normal operation of the compressor without affecting the user's intention to use it.

Step S103: determining a target phase compensation value according to the number of iterations, a preset phase iteration step and an initial phase compensation value.

It can be understood that the preset phase iteration step refers to the phase compensation value each time the phase compensation iteration is performed, and the preset phase iteration step is a fixed phase compensation value; the initial phase compensation value corresponds to the mechanical frequency multiplication component corresponding to the mechanical frequency of the compressor.

Furthermore, before determining the target phase compensation value according to the number of iterations, the preset phase iterative compensation and the initial phase compensation value, the method further includes:
acquiring the mechanical frequency of the compressor;
performing frequency multiplication processing on the mechanical frequency to acquire a mechanical frequency multiplication component;
querying the initial phase compensation value corresponding to the mechanical frequency multiplication component.

In a specific implementation, the mechanical frequency of the compressor is the rated operation frequency of the compressor. If the rated frequency is ωₘ, the mechanical frequency multiplication component acquired by multiplying it is ω_{m-N}, where N can be 1, 2, 3, etc., and this embodiment does not impose any specific limitation on this.

In the specific implementation process, the calculation method of the target compensation phase φN_opt is as follows:
${φ}_{N _ opt} = {φ}_{N} \left({i}_{min}\right) , {i}_{min} = min \left({ω}_{Err}\left(i\right)\right)$

Where, φN(imin) is the phase compensation iteration value corresponding to the minimum rotation speed error ωErr.

The calculation method of the phase compensation iteration value *φ*_{N}(*i*) is as follows:
${φ}_{N} \left(i\right) = {φ}_{N} + i ⋅ Δφ$

Where, Δφ is the phase iteration step, i is the number of iterations, and i=1,2,3•••.

This embodiment counts the rotation speed error values within an operation cycle, and thus iterates the phase compensation value according to different rotation speed errors until a target phase compensation iteration value corresponding to the minimum rotation speed error is determined, so as to subsequently calculate the optimal compensation current.

Referring to FIG. 4, FIG. 4 is a flow chart of a third embodiment of a compressor control method of the present application.

Based on the above second embodiment, in an embodiment, the step S20 includes:
Step S201: determining the operation parameters of the parallel resonant controller according to the target phase compensation value, the mechanical frequency multiplication component and the rotation speed error.
Step S202: calculating the vertical current component compensation value corresponding to the mechanical frequency multiplication component amplitude through a parallel resonant controller.

In an embodiment, the relevant parameters of the parallel resonant controller are the resonant frequency and the phase compensation. In order to calculate the vertical current component compensation value, the resonant frequency and the phase compensation of the parallel resonant controller need to be determined first.

Furthermore, before calculating the vertical current component compensation value corresponding to the mechanical frequency multiplication component amplitude by the parallel resonant controller, the method also includes:
determining the resonant frequency of the target parallel resonant controller according to the mechanical frequency multiplication component;
determining a phase compensation value of the target parallel resonant controller according to the target phase compensation value.

In a specific implementation, the q-axis current compensation Δ*I*_{q_com} is calculated as follows:
${ΔI}_{q _ com} = {\sum }_{i = 1}^{N} {K}_{N} {R}_{rc} \left({ω}_{Err}, {ω}_{m _ N}, {φ}_{N}\right)$

Where, *R_{rc}* is the resonant controller with the resonant frequency being ω_{m_N}, and the phase compensation being *φ*_{N}*.*

Step S203: compensating the vertical current component of the compressor according to the vertical current component compensation value.

It is understandable that the current change of the motor maps the magnitude relationship of the torque. Therefore, when there is an error in the torque, theoretical current compensation amount can be calculated based on the torque error, and then the vertical current component of the motor can be compensated in the next cycle to weaken the noise impact caused by the mechanical structure.

In this embodiment, the phase compensation value of the current is calculated according to the rotation speed error, and then the compensation current of the corresponding vertical current component is calculated according to the mapping relationship between the phase compensation value and the rotation speed-current, so as to compensate the vertical current component and weaken the noise impact caused by the mechanical structure.

In addition, an embodiment of the present application further proposes a storage medium, on which a compressor control program is stored. When the compressor control program is executed by a processor, the steps of the compressor control method described above are implemented.

Since the storage medium adopts all the technical solutions of all the above embodiments, it has at least all the beneficial effects brought by the technical solutions of the above embodiments, which will not be described one by one here.

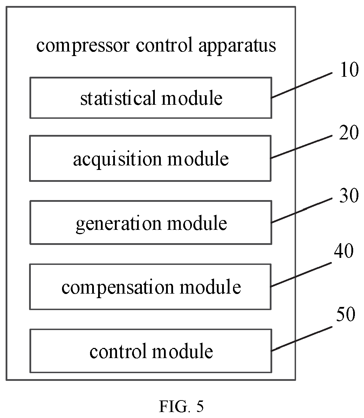

Referring to FIG. 5, FIG. 5 is a structural block diagram of a first embodiment of a compressor control apparatus of the present application.

As shown in FIG5, the compressor control apparatus proposed in the embodiment of the present application includes:
The statistical module 10, used to count the minimum rotation speed error and the corresponding target phase compensation value when the compressor is operating.

Under the current development trend of lightweight and flattening of compressors, the motor winding of the compressor is changed from copper wire to aluminum wire, and the inertia of the structure above the compressor seat spring is reduced, which increases the inherent vibration frequency of the compressor, further worsening the vibration noise of the compressor.

The traditional compressor controller uses a proportional-integral regulator to adjust the rotation speed. During low-frequency operation, due to load torque fluctuations, the compressor rotation speed has periodic fluctuations in the mechanical frequency. Since the proportional-integral regulator responds slowly, it cannot respond and adjust in time to the rotation speed fluctuations of the mechanical frequency. As a result, the rotation speed fluctuations during low-frequency operation cannot be quickly and effectively suppressed; the vibration and noise of the compressor at low frequency operation worsen; the load capacity and stability are limited; and the operation range of the compressor is limited.

In order to solve the above problems, this embodiment statistically calculates the minimum rotation speed error and the corresponding target phase compensation value when the compressor is operating, and then performs current compensation on the compressor through a preset current compensation model according to the minimum rotation speed error and the target phase compensation value, thereby reducing the noise generated by the low-frequency operation of the compressor and extending the operation life of the compressor. At the same time, it can adaptively adjust the parameters of the low-frequency oscillation suppression method to reduce the rotation speed fluctuation of the compressor when it runs at low frequency.

The rotation speed error during compressor operation refers to the error between theoretical operation rotation speed and the actual operation rotation speed of the compressor. The minimum rotation speed error can be the minimum value of the rotation speed error within an operation cycle. The process of acquiring the rotation speed error during compressor operation is a continuous process. In the process of controlling the compressor, the compensation value of the specific vertical current component can be calculated according to the rotation speed error within a cycle, and then the compressor can be compensated for current in the next cycle to reduce the noise when the compressor runs at a low frequency.

Since the motor of the compressor cannot respond and adjust in time to the rotation speed fluctuation of the mechanical frequency during operation, in this embodiment, the input control signal is input in advance to increase the response time of the compressor, thereby achieving phase compensation of the compressor; the initial setting value of the phase compensation is related to the mechanical frequency multiplication component corresponding to the mechanical frequency of the compressor.

The compensation module 20, used to compensate the vertical current component of the compressor through a preset current compensation model according to the minimum rotation speed error and the target phase compensation value.

The preset current compensation model can be used to calculate the current compensation amount corresponding to the rotation speed error and the target phase compensation value in the current cycle, and then in the next operation cycle, the compensated target operation current can be calculated based on the current compensation amount and the operation current of the current operation cycle, thereby alleviating the vibration of the low-frequency operation of the compressor and reducing the generation of noise.

In an embodiment, the vertical current component refers to the q-axis current component of the compressor. The q-axis is also called the quadrature axis and is mainly used to control the magnitude of the force. In addition, there is a p-axis, which is also called the direct axis and is mainly used to control the magnitude of the magnetic field.

This embodiment adjusts the current component of the q-axis in the compressor, thereby reducing the vibration stress of the compressor, alleviating the vibration of the compressor at low frequency operation, and reducing the generation of noise.

The control module 30, used to drive the compressor to operate according to the compensated vertical current component.

In an embodiment, after the current compensation amount is determined in the current cycle, the vibration noise of the compressor in the next operation cycle is reduced by adjusting the magnitude of the q-axis current component of the compressor motor in the next operation cycle, thereby improving the stability of the compressor operation.

In an embodiment, the statistical module 10 is also used for counting the rotation speed error set when the compressor is operating; determining the minimum rotation speed error value and the corresponding number of iterations in the rotation speed error set; and determining the target phase compensation value based on the number of iterations, the preset phase iteration step and the initial phase compensation value.

In an embodiment, the statistical module 10 is further used for acquiring the mechanical frequency of the compressor; performing frequency multiplication processing on the mechanical frequency to acquire a mechanical frequency multiplication component; and querying an initial phase compensation value corresponding to the mechanical frequency multiplication component.

In an embodiment, the statistical module 10 is also used for acquiring the current operation mode of the compressor and the corresponding rotation speed control instruction; extracting the set rotation speed in the rotation speed control instruction; counting the feedback rotation speed of the compressor at each moment after receiving the rotation speed control instruction; and counting the rotation speed error between the set rotation speed and the feedback rotation speed.

In an embodiment, the compensation module 20 is also used for acquiring the mechanical frequency multiplication component corresponding to the mechanical frequency of the compressor; determining the mechanical frequency multiplication component and the mechanical frequency multiplication component amplitude corresponding to the minimum rotation speed error; calculating the vertical current component compensation value corresponding to the mechanical frequency multiplication component amplitude through a parallel resonant controller; and compensating the vertical current component of the compressor according to the vertical current component compensation value.

In an embodiment, the compensation module 20 is further configured to filter the minimum rotation speed error and the mechanical frequency multiplication component through a low-pass filter to acquire the mechanical frequency multiplication component amplitude.

In an embodiment, the compensation module 20 is further used to determine the resonant frequency of the target parallel resonant controller according to the mechanical frequency multiplication component; and to determine the phase compensation value of the target parallel resonant controller according to the target phase compensation value.

In this embodiment, the minimum rotation speed error when the compressor is operating and the corresponding target phase compensation value are calculated. And then according to the minimum rotation speed error and the target phase compensation value, the compressor is compensated for the current through the preset current compensation model, thereby reducing the noise generated by the low-frequency operation of the compressor, avoiding the technical problem of large vibration noise when the compressor runs at low frequency in the related technology, improving the reliability and stability of the compressor when operating at low frequency, and extending the operation life of the compressor. It can adaptively adjust the parameters of the low-frequency oscillation suppression method to reduce the rotation speed fluctuation of the compressor when operating at low frequency.

Although the various steps in the flowchart in the embodiment of the present application are shown in sequence according to the indication of the arrows, these steps are not necessarily performed in sequence according to the order indicated by the arrows. Unless there is a clear explanation in this article, the execution of these steps does not have a strict order restriction, and it can be performed in other orders. Moreover, at least a portion of the steps in the figure may include a plurality of sub-steps or a plurality of stages, and these sub-steps or stages are not necessarily performed at the same time, but can be performed at different times, and their execution order is not necessarily performed in sequence, but can be performed in turn or alternately with at least a portion of other steps or sub-steps or stages of other steps.

It should be understood that the above is only an example and does not constitute any limitation on the technical solution of the present application. In specific applications, those skilled in the art can make settings as needed, and the present application does not impose any limitation on this.

It should be noted that the workflow described above is merely illustrative and does not limit the protection scope of the present application. In practical applications, those skilled in the art can select part or all of it according to actual needs to achieve the purpose of the present embodiment, and no limitation is made here.

In addition, for technical details that are not described in detail in this embodiment, please refer to the compressor control method provided in any embodiment of the present application, and it will not be repeated here.

In addition, it should be noted that, in this article, the terms "include", "comprise" or any other variations thereof are intended to cover non-exclusive inclusion, so that a process, method, article or system including a series of elements includes not only those elements, but also other elements not explicitly listed, or also includes elements inherent to such process, method, article or system. In the absence of further restrictions, an element defined by the sentence "comprises a ..." does not exclude the presence of other identical elements in the process, method, article or system including the element.

The serial numbers of the above-mentioned embodiments of the present application are for description only and do not represent the advantages or disadvantages of the embodiments.

Through the above description of the embodiments, those skilled in the art can clearly understand the above embodiment method can be implemented by means of software plus a necessary general hardware platform, or by hardware, but in many cases the former is a better implementation method. Based on this understanding, the technical solution of the present application, or the part that contributes to the relevant technology, can be embodied in the form of a software product, which is stored in a storage medium (such as a read-only memory (ROM)/RAM, a disk, or an optical disk), and includes a number of instructions for a terminal device (which can be a mobile phone, a computer, a server, or a network device, etc.) to execute the methods described in each embodiment of the present application.

The above are only some embodiments of the present application, and not intended to limit the patent scope of the present application. Any equivalent structure or equivalent process transformation made using the contents of the present application specification and drawings, or directly or indirectly applied in other related technical fields, are also included in the patent protection scope of the present application.

## Claims

1. A compressor control method, comprising:
counting a minimum rotation speed error and a corresponding target phase compensation value when the compressor is operating;
acquiring a mechanical frequency multiplication component corresponding to a mechanical frequency of the compressor;
generating a mechanical frequency multiplication component amplitude according to the mechanical frequency multiplication component and the minimum rotation speed error;
compensating a vertical current component of the compressor through a preset current compensation model according to the mechanical frequency multiplication component amplitude and the target phase compensation value; and
driving the compressor to operate according to a compensated vertical current component.

2. The compressor control method according to claim 1, wherein the counting the minimum rotation speed error and the corresponding target phase compensation value when the compressor is operating comprises:
counting a rotation speed error set when the compressor is operating;
determining a minimum rotation speed error value in the rotation speed error set and a corresponding number of iterations; and
determining the target phase compensation value according to the number of iterations, a preset phase iteration step and an initial phase compensation value.

3. The compressor control method according to claim 2, wherein before the determining the target phase compensation value according to the number of iterations, the preset phase iteration step and the initial phase compensation value, the method further comprises:
acquiring the mechanical frequency of the compressor;
performing frequency multiplication processing on the mechanical frequency to acquire the mechanical frequency multiplication component; and
querying the initial phase compensation value corresponding to the mechanical frequency multiplication component.

4. The compressor control method according to claim 2, wherein the counting the rotation speed error set when the compressor is operating comprises:
acquiring a current operation mode of the compressor and a corresponding rotation speed control instruction;
extracting a set rotation speed in the rotation speed control instruction;
counting a feedback rotation speed of the compressor at each moment after receiving the rotation speed control instruction; and
counting a rotation speed error between the set rotation speed and the feedback rotation speed.

5. The compressor control method according to any one of claims 1 to 4, wherein the compensating the vertical current component of the compressor through the preset current compensation model according to the mechanical frequency multiplication component amplitude and the target phase compensation value comprises:
determining operation parameters of a parallel resonant controller according to the target phase compensation value, the mechanical frequency multiplication component, and the rotation speed error;
calculating a vertical current component compensation value corresponding to the mechanical frequency multiplication component amplitude by the parallel resonant controller; and
compensating the vertical current component of the compressor according to the vertical current component compensation value.

6. The compressor control method according to claim 5, wherein the determining the mechanical frequency multiplication component and the mechanical frequency multiplication component amplitude corresponding to the minimum rotation speed error comprises:
filtering the minimum rotation speed error and the mechanical frequency multiplication component by a low-pass filter to acquire the mechanical frequency multiplication component amplitude.

7. The compressor control method according to claim 5, wherein before the calculating the vertical current component compensation value corresponding to the mechanical frequency multiplication component amplitude by the parallel resonant controller, the method further comprises:
determining a resonant frequency of the target parallel resonant controller according to the mechanical frequency multiplication component; and
determining a phase compensation value of the target parallel resonant controller according to the target phase compensation value.

8. A compressor control apparatus, comprising:
a statistical module, configured to count a minimum rotation speed error and a corresponding target phase compensation value when the compressor is operating;
an acquisition module, configured to acquire a mechanical frequency multiplication component corresponding to a mechanical frequency of the compressor;
a generation module, configured to generate a mechanical frequency multiplication component amplitude according to the mechanical frequency multiple frequency component and the minimum rotation speed error;
a compensation module, configured to compensate a vertical current component of the compressor through a preset current compensation model according to the mechanical frequency multiplication component amplitude and the target phase compensation value; and
a control module, configured to drive the compressor to operate according to a compensated vertical current component.

9. A compressor control device, comprising a memory, a processor, and a compressor control program stored in the memory and executable on the processor, wherein the compressor control program is configured to implement the compressor control method according to any one of claims 1 to 7.

10. A storage medium, having stored thereon a compressor control program, wherein when the compressor control program is executed by a processor, the compressor control method according to any one of claims 1 to 7 is implemented.
